# EUROPEAN PATENT APPLICATION

(11) **EP 1 519 429 A2**
(43) Date of publication of application: **30.03.2005**
(21) Application number: 04255849.4
(22) Date of filing: 24.09.2004
(51) Int. Cl.: H01M 2/04, H01M 2/08

(54) **Alkaline dry battery**

(30) Priority: 24.09.2003 JP 2003331806
(71) Applicant: MATSUSHITA ELECTRIC INDUSTRIAL CO., LTD., Kadoma-shi, Osaka 571-8501 (JP)
(72) Inventor: Sumiyama, Shinichi, Hirakata-shi, Osaka 573-0011 (JP); Yamamoto, Kenji, Katano-shi, Osaka 576-0021 (JP); Shoji, Yasuhiko, Higashiosaka-shi, Osaka 579-8003 (JP); Okubo, Takeshi, Hirakata-shi, Osaka 573-0076 (JP); Wada, Seiji, Katano-shi, Osaka 576-0021 (JP)
(74) Representative: Price, Paul Anthony King

(57) **Abstract**

In an alkaline dry battery, a sealant comprising grease (7) with a worked penetration of from 175 to 475 is disposed between an opening end of a metal case (1) and a peripheral end of the outer ring portion (5b) of a sealing body (5). This sealant, comprising the above grease, differs from a conventional sealant in being usable without using an organic solvent. This sealant is also capable of preventing creeping of an electrolyte between the metal case (1) and the sealing body (5).

## Description

### BACKGROUND OF THE INVENTION

The present invention relates to an alkaline dry battery, and especially to an alkaline dry battery in which a sealant, intervening between a metal case for housing a power generating element and a sealing body for sealing the opening of the metal case, has been improved.

In alkaline dry batteries, a sealant is provided between a metal case and a resin-made sealing body for sealing the opening of the case. The sealant is required to have both stability to an electrolyte and the function of preventing creeping of the electrolyte due to capillarity. As this sealant, blown asphalt, polybutene or the like has hitherto been used, and as a solvent for diluting the sealant, an organic solvent such as xylene or toluene needs to be used.

When such a sealant is used, it is required that a solution obtained by dissolving the sealant in an organic solvent be applied on an opening end of a metal case and the solvent be evaporated with hot air. However, the organic solvent has been known to contaminate the global environment. With the recently growing consciousness of global environmental problems, in particular, reduction in use of a volatile organic compound (VOC), or the like, has been required. Although recycle of used VOC's has been in practice, complete recycle is difficult at the present time.

On the other hand, it can be considered that a sealant is melted and applied as it is on an opening end of a metal case, without using an organic solvent. However, this method is not practical since melting a sealant necessitates a great amount of thermal energy.

It has hitherto been proposed that in a lead-acid storage battery, a gap between a lid of a battery case and an electrode pillar be filled with water-repellent grease having acid resistance (Japanese Laid-Open Utility Model Publication No. Hei 6-44021). In this application, grease is used for preventing the electrode pillar from being corroded by an electrolyte.

There is a need to provide an alternative material to a sealant necessitating the use of an organic solvent. Namely, an aspect of the present invention is to provide an alkaline dry battery which is usable without an organic solvent, and comprises a sealant capable of stably preventing creeping of an electrolyte between a metal case and a sealing body.

### BRIEF SUMMARY OF THE INVENTION

The present invention relates to an alkaline dry battery comprising: (a) a metal case housing a power generating element; and (b) an assembled sealing plate for sealing the opening of the metal case. The assembled sealing plate comprises a negative electrode terminal plate, a negative electrode current collector electrically connected to the negative electrode terminal plate, and a sealing body. The sealing body comprises a central cylindrical portion having a through hole into which the negative electrode current collector is inserted, and an outer ring portion pinched between the peripheral end of the negative electrode terminal plate and the opening end of the metal case. Grease is disposed between the opening end of the metal case and a peripheral end of the outer ring portion of the sealing body, the grease having a worked penetration of from 175 to 475.

The grease mentioned here is a semisolid or solid material obtained by adding a thickener to a base oil (lubricating oil).

It is preferable in the above alkaline dry battery that the grease have a worked penetration of from 265 to 475.

The present invention further relates to an alkaline dry battery comprising: (a) a metal case housing a power generating element; and (b) an assembled sealing plate for sealing the opening of the metal case. The assembled sealing plate comprises a negative electrode terminal plate, a negative electrode current collector electrically connected to the negative electrode terminal plate, a sealing body, and a metal base material. The sealing body comprises a central cylindrical portion having a through hole into which the negative electrode current collector is inserted, and an outer ring portion. The opening end of the metal case is cramped onto the negative electrode terminal plate and the metal base material via the outer ring portion of the sealing body. Grease is disposed between the opening end of the metal case and a peripheral end of the outer ring portion of the sealing body, the grease having a worked penetration of from 175 to 475.

While the novel features of the invention are set forth particularly in the appended claims, the invention, both as to organization and content, will be better understood and appreciated, along with other objects and features thereof, from the following detailed description taken in conjunction with the drawing.

### BRIEF DESCRIPTION OF THE VIEW OF THE DRAWING

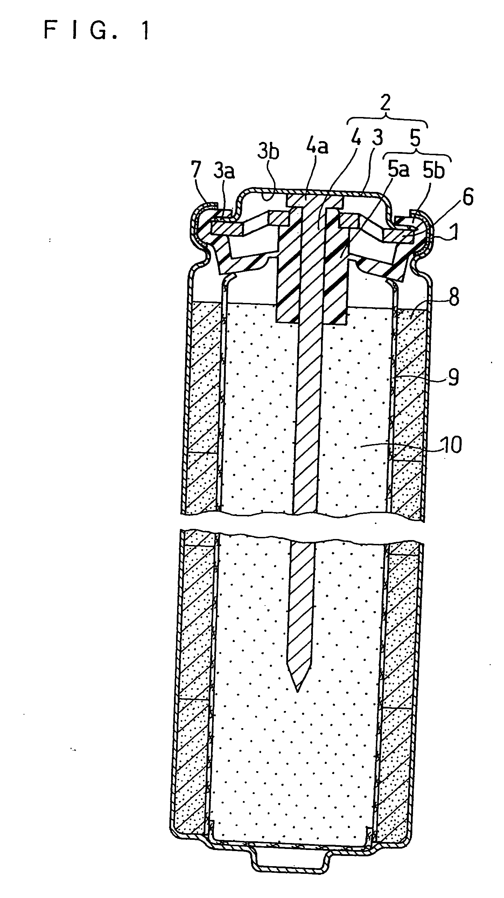

FIG. 1 is a vertical sectional view illustrating one embodiment of an alkaline dry battery in accordance with the present invention.

### DETAILED DESCRIPTION OF THE ILLUSTRATED EMBODIMENT OF THE INVENTION

An alkaline dry battery of the present invention is described below, with reference to FIG. 1.

FIG. 1 is a vertical sectional view illustrating one embodiment of an alkaline dry battery in accordance with the present invention.

An alkaline dry battery of the present embodiment comprises a metal case 1 which functions as a positive electrode terminal, and an assembled sealing plate 2 for sealing the opening of the metal case 1.

The assembled sealing plate 2 comprises a disc-like negative electrode terminal plate 3 having a brim-like peripheral end 3a, a nail-like negative electrode current collector 4 electrically connected to the inner bottom 3b of the negative electrode terminal plate 3 at the flat top 4a, and a sealing body 5. The sealing body 5 comprises a central cylindrical portion 5a having a through hole into which the negative electrode current collector 4 is inserted, and an outer ring portion 5b pinched between the brim-like peripheral end of the negative electrode terminal plate and the opening end of the metal case. At the outer ring portion 5b of the sealing body 5, a concave groove portion is formed, and a metal base material 6 is fitted in the groove portion. Further, grease 7 is disposed as a sealant between the opening end of the metal case 1 and the peripheral end of the outer ring portion 5b of the sealing body 5.

The metal case 1 contains, as power generating elements, a hollow cylindrical positive electrode material mixture 8 disposed so as to be in contact with the inner wall of the metal case 1, a closed-bottomed cylindrical separator 9 disposed so as to be in contact with the inner wall of the positive electrode material mixture 8, a gel negative electrode 10 filled inside the separator 9, and an alkaline electrolyte (not shown).

As the metal case 1, the negative electrode terminal plate 3, the negative electrode current collecting 4, the sealing body 5 and the metal base material 6, those known in the art can be used.

As the positive electrode material mixture 8, the separator 9, the gel negative electrode 10 and the alkaline electrolyte, which are the power generating elements housed in the metal case 1, those known in the art can be used. As the positive electrode material mixture 8, for example, a mixture of manganese dioxide serving as a positive electrode active material and graphite serving as a conductive material, or the like, can be used. As the separator 9, a non-woven fabric obtained by mixing of mainly a polyvinyl alcohol fiber and a rayon fiber, or the like, can be used. As the gel negative electrode 10, a mixture of a zinc powder serving as a negative electrode active material, sodium polyacrylate serving as a gelling agent and an aqueous potassium hydroxide solution serving as the alkaline electrolyte, or the like, can be used.

Next, grease to be used as a sealant in the present invention is described.

Grease to be used in the present invention needs to have the function of preventing creeping of the alkaline electrolyte due to capillarity, and a favorable pumpability (flowability when the grease flows through a tube, a nozzle and the like during the supply thereof).

For preventing the creeping of the alkaline electrolyte due to capillarity, it is necessary to uniformly apply the grease in between the peripheral end of the sealing body and the metal case. Further, it is necessary that the grease have a resistance to an alkaline electrolyte so as not to be flown out of the gap between the metal case and the peripheral end even when coming into contact with the alkaline electrolyte.

The grease can be applied uniformly by adjusting the worked penetration thereof a predetermined range which is preferable. Meanwhile, the resistance to an alkaline electrolyte can be controlled by varying the kind and amount of a base oil and a thickener, which constitute the grease.

The base oil, for use in obtaining grease with a favorable worked penetration and a favorable resistance to an alkaline electrolyte, may be exemplified by a diester oil and a silicone oil. The thickener may be exemplified by metal soaps (e.g. a castor oil based calcium soap, a castor oil based aluminum soap, a castor oil based lithium soap), complex soaps (e.g. a complex calcium soap, a complex aluminum soap, a complex lithium soap), diurea compounds (e.g. aromatic diurea, aliphatic diurea, alicyclic diurea), and organic compounds (e.g. polytetrafluoroethylene (PTFE) and sodium terephthalamate).

Examples of the diester oil may include polyethylene glycol distearate, octyl stearate, octyl palmitate, isopropyl palmitate, and glycerol tri-2-ethyl hexanoate. Further, examples of the silicone oil may include a dimetyl silicone oil, a methyl phenyl silicone oil, and a methyl hydrogen silicone oil.

However, the productivity deteriorates when the grease has a poor pumpability in application on the metal case although the uniform application of the grease on the metal case is possible. In order to allow the grease not only to prevent the creeping of the electrolyte, but to have a favorable pumpability, it is necessary that the grease have a worked penetration (ASTM D217 or JIS K2220) of from 175 to 475, preferably from 265 to 475. The worked penetration is arbitrarily adjustable by varying the kinds of the base oil and the thickener, a mixing ratio of the base oil and the thickener, and the like. It is to be noted that the mixing ratio of the base oil and the thickener is preferably from 98:2 to 80:20, and more preferably from 98:2 to 90:10.

In the present invention, when the worked penetration of the grease falls below 175, the pumpability becomes insufficient and the uniform application of the grease on the metal case becomes difficult, thereby decreasing the function of preventing the creeping of the alkaline electrolyte. On the other hand, when the worked penetration exceeds 475, the flowability increases to cause the grease to drip off from a nozzle or an amount of the grease applied to vary, thereby deteriorating the productivity.

Herein, a worked penetration expresses apparent hardness of grease. A worked penetration is obtained by reciprocating a stirrer 60 times while keeping grease at 25°C in a predetermined mixing device, immediately followed by measurement of the depth of a predetermined cone having entered into the grease by means of a cone penetrometer, and then decupling the obtained depth value (expressed by the "mm" unit). A worked penetration can be measured according to "JIS K2220".

Specifically, a sample is prepared according to JIS K2220, and thereafter, a cone held by a holding fixture (total weight of the cone and the holding fixture: 148 g) is vertically penetrated into the sample from the sample surface having been made flat, in a cone penetrometer for 5 seconds. Subsequently, the depth of penetration of the cone is measured and the obtained value is decupled. Such a measurement is repeated three times and the obtained values are averaged to determine a worked penetration.

### Example 1

In the present example, a dry battery as illustrated in FIG. 1 was fabricated.

### (i) Assembly of battery

A hollow cylindrical positive electrode material mixture 8 was inserted into an iron-made metal case 1 serving as a positive electrode terminal, and then molded using a pressurizing jig to be brought into close contact with the inner wall of the metal case 1. A closed-bottomed separator 9 was disposed so as to be in contact with the positive electrode material mixture 8, and a predetermined amount of an alkaline electrolyte was poured inside the separator 9. Thereafter, a gel negative electrode 10 was filled inside the separator 9.

Next, grease comprising a diester oil as a base oil and a lithium soap as a thickener was applied on the opening end of the metal case 1. The worked penetrations of the greases are adjusted by the mixing ratio of diester oil, lithium soap, and the like. Herein used were greases having seven kinds of worked penetrations of No. 000 to 4 according to JIS classification, which are in the range of 175 to 475, as shown in Table 1. It is to be noted that, for example, grease having an actual worked penetration of 191 can be regarded as being equivalent to grease of No. 4 according to the JIS classification (worked penetration of from 175 to 205), that is, greases having a worked penetration of from 175 to 205 can be regarded as having the equivalent property.

Further, Table 1 also shows actual worked penetrations of the greases used. Herein, polyethylene glycol distearate was used as the diester oil, and a castor oil based lithium soap was used as the lithium soap. As shown in Table 1, the larger the worked penetration, the smaller the hardness.

Subsequently, the negative electrode current collector 4 of the assembled sealing plate 2 was inserted into the central portion of the gel negative electrode 10, and the opening of the metal case 1 was sealed with the negative electrode terminal plate 3. Finally, the opening end of the metal case 1 where the grease had been applied was cramped via the outer ring portion 5b of the sealing body 5 onto the metal base material 6 and the brim-like peripheral end 3a of the negative electrode terminal plate 3 in contact with the metal base material 6 to tightly seal the inside of the metal case 1 so that an AA dry battery was completed. Alkaline dry batteries comprising greases with the above seven kinds of worked penetrations were respectively referred to as Battery 1, Battery 2, Battery 3, Battery 4, Battery 5, Battery 6 and Battery 7. Herein, in Batteries 1 to 7, the respective mixing ratios (weight ratios) of polyethylene glycol distearate and the castor oil based lithium soap, which constituted the grease were 98:2, 96:4, 94:6, 92:8, 90:10, 85:15 and 80:20. Herein, the grease was produced by mixed the base oil with the thickener, and cooling the obtained mixture at a predetermined rate.

Further, batteries respectively comprising greases with worked penetrations of No. 5 and 6 according to JIS classification, which are in the range of 160 to 85, were fabricated in the same manner as above and referred to as Comparative Batteries A and B. Herein, the respective mixing ratios (weight ratios) of polyethylene glycol distearate and the castor oil based lithium soap, which constituted the grease, in Comparative Examples A and B were 80:20. It should be noted that when the worked penetration is not higher than 175, the worked penetration also varies depending on the cooling rate at which the mixture is cooled. Namely, when the cooling rate is slowed, the worked penetration decreases and the grease becomes harder. The grease to be used in Comparative Battery A was produced using a slower cooling rate than the cooling rate to be used for production of the grease for use in Battery 7. The grease to be used in Comparative Battery B was produced using a slower cooling rate than the cooling rate to be used for production of the grease for use in Comparative Battery A.

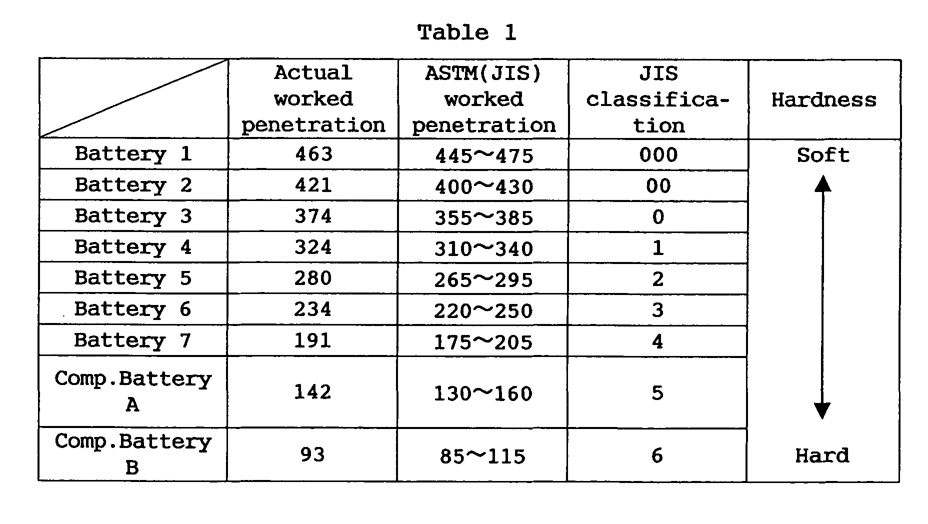

100 articles each of the alkaline dry batteries having the respective worked penetrations were fabricated. These batteries were stored under conditions of a temperature of 45°C and a humidity of 90%RH, and the number of batteries in which liquid leakage had occurred was counted. The obtained results are shown in Table 2.

### Comparative Example 1

An AA alkaline dry battery was fabricated in the same manner as Example 1, except that blown asphalt was used as the sealant in place of the grease; the blown asphalt was dissolved in toluene and the resultant solution was applied on the iron-made metal case, followed by evaporation of toluene, to form a sealant film. The alkaline dry battery as thus fabricated was referred to as Comparative Battery C. 100 articles of Comparative Battery C were stored under conditions of a temperature of 45°C and a humidity of 90%RH, and the number of batteries in which liquid leakage had occurred was counted. The obtained results are shown in Table 2.

**Table 2**

| | Storing term | | |
|---|---|---|---|
| | 1 month | 3 months | 6 months |
| Comp.Battery C (conventional battery) | 0/100 | 0/100 | 0/100 |
| Battery 1 | 0/100 | 0/100 | 0/100 |
| Battery 2 | 0/100 | 0/100 | 0/100 |
| Battery 3 | 0/100 | 0/100 | 0/100 |
| Battery 4 | 0/100 | 0/100 | 0/100 |
| Battery 5 | 0/100 | 0/100 | 0/100 |
| Battery 6 | 0/100 | 0/100 | 0/100 |
| Battery 7 | 0/100 | 0/100 | 0/100 |
| Comp.Battery A | 0/100 | 1/100 | 5/100 |
| Comp.Battery B | 0/100 | 3/100 | 10/100 |

Values shown are: liquid leakage occurred / the number of batteries tested

As understood from Table 2, Batteries 1 to 7 exhibited the same level of liquid-leakage resistance property as that of the conventional battery (Comparative Battery C). As for each of Batteries 6 and 7, although the productivity slightly decreases due to the grease having the low worked penetration and high viscosity, a predetermined liquid-leakage resistance property is satisfied. It can thereby be understood that a worked penetration of grease needs to be from 175 to 475. In particular, a preferable worked penetration of grease is from 265 to 475 so as to prevent a decrease in productivity of the alkaline dry battery.

On the other hand, since each of the greases respectively used in Comparative Examples A and B had a lower worked penetration and a higher viscosity than those of Batteries 6 and 7, the grease was nonuniformly applied on the opening end of the metal case; it was difficult to uniformly apply the grease. This is presumably the cause of the decrease in liquid-leakage resistance property of the batteries.

It is to be noted that the following were confirmed: grease comprising a silicone oil as the base oil, and another metal soap, a diurea compound (e.g. aromatic diurea, aliphatic diurea, alicyclic diurea), or an organic compound (e.g. polytetrafluoroethylene (PTFE) and sodium terephthalamate), as the thickener, has the same level of the liquid-leakage resistance property as that of the conventional sealing body by making the range of the worked penetration of the grease from 175 to 475; the grease has a lowered liquid-leakage resistance property when the worked penetration thereof is below 175.

Accordingly, an alkaline dry battery using, as a sealant, grease with a worked penetration of from 175 to 475 exhibits an excellent liquid-leakage resistance property and has no problem with the productivity.

Therefore, the use of grease having a worked penetration of from 175 to 475, preferably 265 to 475, allows fabrication of an alkaline dry battery excellent in liquid-leakage resistance property. Moreover, with such grease as described above in use as a sealant, the sealant has an excellent pumpability when applied on a metal case by means of an application device, even without dilution of the sealant with an organic solvent before the application.

As thus described, in the present invention, the use of predetermined grease eliminates the need for using an organic solvent during fabrication of an alkaline dry battery, and the productivity of the battery is excellent. Furthermore, according to the present invention, it is possible to provide a battery excellent in liquid-leakage resistance property by the use of the above grease.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. An alkaline dry battery comprising:
(a) a metal case housing a power generating element; and
(b) an assembled sealing plate for sealing the opening of said metal case,
said assembled sealing plate comprising a negative electrode terminal plate, a negative electrode current collector electrically connected to said negative electrode terminal plate, and a sealing body,
said sealing body comprising a central cylindrical portion having a through hole into which said negative electrode current collector is inserted, and an outer ring portion pinched between the peripheral end of said negative electrode terminal plate and the opening end of said metal case,
grease being disposed between said opening end of said metal case and a peripheral end of said outer ring portion of said sealing body, said grease having a worked penetration of from 175 to 475.

2. The alkaline dry battery in accordance with claim 1, wherein said grease has a worked penetration of from 265 to 475.

3. An alkaline dry battery comprising:
(a) a metal case housing a power generating element; and
(b) an assembled sealing plate for sealing the opening of said metal case,
said assembled sealing plate comprising a negative electrode terminal plate, a negative electrode current collector electrically connected to said negative electrode terminal plate, a sealing body, and a metal base material,
said sealing body comprising a central cylindrical portion having a through hole into which said negative electrode current collector is inserted, and an outer ring portion,
the opening end of said metal case being cramped onto said negative electrode terminal plate and said metal base material via the outer ring portion of said sealing body,
grease being disposed between said opening end of said metal case and a peripheral end of said outer ring portion of said sealing body, said grease having a worked penetration of from 175 to 475.
